# EUROPEAN PATENT SPECIFICATION

(11) **EP 2 765 118 B1**
(45) Date of publication and mention of the grant of the patent: **13.02.2019**
(21) Application number: 13196802.6
(22) Date of filing: 12.12.2013
(51) Int. Cl.: C02F 1/28, C02F 1/32, C02F 1/461, C02F 1/42, C02F 1/467, B01F 3/04, C02F 1/68, C02F 101/20, C02F 103/00

(54) **Wastewater treatment apparatus and method**
Abwasserbehandlungsvorrichtung und Verfahren
Appareil et procédé de traitement des eaux usées

(30) Priority: 06.02.2013 GB 201302075
(43) Date of publication of application: 13.08.2014
(73) Proprietor: VWS (UK) Limited, High Wycombe Buckinghamshire HP11 1JU (GB)
(72) Inventor: Mortimer, Alan Denton, Henley-on-Thames, Oxfordshire RG9 1QN (GB); Underwood, Lee, High Wycombe, Buckinghamshire HP15 7JS (GB); Keary, James, High Wycombe, Buckinghamshire HP11 2SY (GB)
(74) Representative: Murgitroyd & Company

(56) References cited:
- WO-A1-02/085793
- WO-A1-2008/150541
- WO-A2-2012/093284
- DE-U1- 20 004 007
- US-A- 3 943 261

## Description

The present invention relates to apparatus for treating clinical analyser wastewater and a method treating same.

Clinical analysers are well known in the art, generally being medical laboratory instruments able to analyse a sample, generally a medical sample, to determine one or more characteristics in or for a clinical purpose. One example is an analyser able to measure the properties of bodily fluids such as blood or urine, to assist in diagnosis of a condition or disease of a patient.

Clinical analysers can process a large portion of the samples going into a hospital or private medical laboratory. In the US, such apparatus are regulated under the Code of Federal Regulations (CFR) Title 21, in particular Part 862. Section 862.2150 defines a continuous flow sequential multiple chemistry analyser for clinical use.

Clinical analysers, with their increasing automation, can provide faster and more accurate and more wide ranging information to a user or operator or to medical personnel, and are being increasingly used in research, hospitals, medical laboratories and similar faculties, often in batch processing environments.

Clinical analysers generally use one or more waters streams, often purified or indeed ultrapurified water, in the analysis and processing, and/or for cleaning of samples and sample holders, etc.. The or each resultant water stream or streams, or 'effluent(s)', after such use is or are termed the 'wastewater'. Where there are multiple resultant streams, each stream can be dealt with separately, but are usually combined together to form a single wastewater stream. Due to the use of alkaline solutions such as sodium hydroxide in the analyser processes the wastewater is typically high pH.

With increasing health and safety legislation and increased local regulation, clinical analyser wastewater is increasingly unable to be simply discharged to a drain, but must instead be collected for off-site disposal or treatment, or is increasingly required to be treated on site.

Past clinical analyser wastewater treatment units that were commercially available involved various chemical treatment steps to provide disinfection and neutralisation of the analyser wastewater by the use of harsh chemicals such as strong sodium hydroxide, hydrochloric acid or peracetic acid. Such chemicals are not only harmful in themselves to the environment, but also require particular care in their use and safe disposal.

WO2012/093284 disclosed a clinical analyser wastewater treatment apparatus that does not rely on the use of such chemicals. Instead it uses a combination of processes such as having an anodic oxidation section and /or a heavy metal removal section and/or a UV oxidation section to affect the treatment of the waste. In this way, there is the much safer, chemical-free and environmentally friendly use of anodic oxidation for disinfection, rather than the use of strongly acidic or strongly alkaline chemicals.

The treatment in WO2012/093284 is further provided by pH adjustment of the wastewater by its passage through weak acid cation resin.

WO2008/150541A discloses a electrochemical system for treatment of municipal water supplies, using chemical agents to control standard water quality parameters, said agents being effective to provide an acidic wash to the electrolytic cell.

It is an object of the present invention to provide a clinical analyser wastewater treatment apparatus with improved pH control of the water before it is passed to drain.

Thus according to one aspect of the present invention, there is provided a clinical analyser wastewater treatment apparatus able to neutralise a clinical analyser wastewater stream as claimed in claim 1.

Optionally, the clinical analyser wastewater treatment apparatus of the present invention is able to provide a treated stream having a COD of <2500mg/l, preferably <2000mg/l, and a pH <9, preferably a pH <8.5.

The treatment apparatus of the present invention comprises at least one inlet, optionally a plurality of inlets, optionally for receiving water from a number of waste outlets from a clinical analyser or from multiple clinical analysers.

Similarly, the treatment apparatus of the present invention comprises at least one outlet, optionally a plurality of outlets. At least one outlet of the treatment apparatus provides a discharge, line or passage to a drain, preferably a nondedicated drain within the environment of the clinical analyser.

The term "clinical analyser" as used herein relates to any apparatus, unit or instrument able to analyse a medical or biological sample, usually in an automated manner, and commonly in a multiple batch process, in order to measure or define one or more characteristics of or within the sample, such as the presence and/or amount of certain chemical or biological substances, such as particular markers or cells or the like. Suitable examples include the analysis of blood or other bodily fluids. In the US, such clinical analysers can be defined under CFR21 Part 862.

The term "wastewater" as used herein relates to one or more of the discharges or effluents from a clinical analyser which include one or more substances not considered environmentally safe for direct discharge into a drain or other non-clinical water system. Such substances include, but are not limited to, ions, organics, biochemical reagents, heavy metals, heavy metal complexes, inorganic salts, inorganic reagents, and any other chemically or biologically active bodies.

The term "carbonator" as used herein relates to any device that is used to dissolve gaseous carbon dioxide into the water stream. Carbonators are known in the beverage industry for adding pressurised carbon dioxide to the liquid. This changes the pH of the beverage making it acidic and provides for the formation of bubbles when the drink is opened or dispensed. Examples of carbonators for the drinks industry are as provided by IMI Cornelius (Brighouse, UK). A carbonator requires a source of carbon dioxide such as a pressurised cylinder such as supplied by BOC (Guildford, UK) and typically of high purity e.g. >99% or as defined in standards such as BS4105 part 1 or part 2; and a contactor which may be as simple as a sintered outlet but may also be a hydrophobic membrane such as available from Membrana (Wuppertal, DE)

The "measurement device" may be a pH sensor but alternatively may be a sensor that will react to the pH of the stream such as a conductivity sensor that will measure a higher conductivity at elevated pH due to the conductivity of the hydroxide ion.

One or more of the discharges or effluents from a clinical analyser (forming the wastewater) may be the same or different from one or more other discharges or effluents, generally but not limited to differences in volume, substances and/or concentrations of one or more of the same or different substances. For example, a clinical analyser may discharge a strong or 'concentrated' effluent stream and a weak or 'diluted' effluent stream, the former being a discharge stream from one or more actual analyses, and the latter being a rinsing stream or the like. The skilled person is aware that the terms strong or 'concentrated' and weak or 'diluted' are relative to each other without limitation, but the former could be for example x3, x5 or x10 the latter in the concentration of one or more substances.

The present invention includes any arrangement of the treatment of one or more similar or different discharge or effluent streams from a clinical analyser(s), optionally as a single entry stream or as different entry streams entering at different sections of the treatment apparatus or in or before different steps. All, some or only one of the streams may be alkaline as they enter the clinical analyser wastewater treatment apparatus.

Thus, and by way of example only, the wastewater able to be treated by the present invention could comprise:
(i) a single alkaline concentrated effluent stream,
(ii) a first concentrated effluent stream combined with a first diluted stream prior to the anodic oxidation, either stream being alkaline; or
(iii) a first concentrated effluent stream combined with a first diluted stream after the anodic oxidation, either stream being alkaline.
pH is a measure of the concentration of the hydrogen ion in solution and in aqueous solutions a pH of 7 indicates a neutral solution with equal amounts of the dissociation species of water, hydronium and hydroxide ions at equilibrium with the combined molecule. Municipal water authorities have limits on the water that is passed into the drainage (sewerage) system in terms of the pH of the water as water away from neutral can have detrimental effects on the sewer systems' integrity, can have a detrimental effect on the workings of sewage treatment facilities especially those that use bacterial processes or could have an environmental effect if passed to rivers etc.

Thus, according to another aspect of the present invention, there is provided a method of treating a clinical analyser wastewater stream as defined in claim 6.

The term "section" as used herein, such as in relation to an anodic oxidation section, any UV oxidation section, a heavy metal removal section, or a carbonator section can relate to a distinct or separate stage, position or location, or to a non-distinct or non-separate stage, position or location, across, during or at which the relevant function or process can occur or otherwise be applied to the wastewater.

Thus, the term "section" can include a position along a line or passageway for wastewater, optionally having one or more defined inlets and one or more defined outlets, during or across which the relevant process or action such as anodic oxidation, can be applied.

Additionally or alternatively, the term "section" can include a cell, tank, chamber, container, etc., able to contain a volume of wastewater, optionally having one or more defined inlets and one or more defined outlets, within which the relevant process or action such as anodic oxidation, can be applied.

Two or more sections of the treatment apparatus of the present invention may overlap, or at least have one or more overlapping regions or locations.

Preferably, at least two sections of treatment apparatus of the present invention are distinct and/or separate, having a distinct region, border, line or other passageway, such as a weir, thereinbetween.

Also preferably, each section of the treatment apparatus of the present invention is, or is carried out within, a distinct physical entity such as a cell, tank or passageway.

Thus, preferably, a clinical analyser wastewater treatment apparatus of the present invention comprises a carbonator section and one or more of an anodic oxidation section, UV oxidation section, and heavy metal removal section, each section comprising a chamber for the passage of clinical analyser wastewater therethrough.

Clinical analyser wastewater to the apparatus and methods of the present invention may be provided in a continuous manner, in a batch-wise manner, or a combination of same. Typically such wastewater is provided for a treatment after each batch of testing and analysing of relevant samples, but the invention is not limited thereto.

The present invention is able to work for any suitable flow rate of wastewater therethrough, depending upon the size, shape, design and composition of each section. A suitable commercial flow rate through the clinical analyser wastewater apparatus can be up to 2 1/h, although the present invention can be adapted to more particularly operate on higher and/or lower flow rates. Higher rates may apply where a larger volume of a diluted stream is combined with a post-anodic oxidation stream.

Partial or full recirculation may be included to maximise contact time in one or more of the treatment sections.

Optionally, the treatment apparatus of the present invention includes a volume, such as but not limited to the volume of one or more of the sections of the treatment apparatus, and wastewater in the apparatus and not yet discharged from the apparatus defines a 'residual volume' of at least partly treated water in the apparatus. Where the apparatus involves partial of full recirculation of one or more water streams within the apparatus, the residual volume may involve the partial replacement of some of the residual volume by any further incoming stream of wastewater, and the discharge of a similar volume of treated water, such that the residual volume is wholly or substantially the same within the apparatus.

Recirculation of at least one water stream, and the presence of a residual volume, allows the present invention to treat a series of wastewater streams provided over time or in an irregular pattern, whilst providing discharge in a more desirable pattern.

According to one embodiment of the present invention, the anodic oxidation section includes a conductive diamond anode. Such an electrode has a core material or base electrode substrate, able to support on its outer (active) surface a diamond material. Several methods are known for depositing diamond material on an electrode substrate, including CVD and PVD processes, to provide a diamond film or coating, generally comprising fine diamond particles as a thin final layer. Generally, the diamond is provided as a synthetic diamond obtained by reducing one or more suitable organic compounds in a manner known in the art.

Preferably, the conductive diamond anode is a boron doped diamond electrode, wherein a small amount of a boron 'impurity' is included in the diamond material and/or final diamond layer. Boron doped diamond electrodes are tough and resistant to degradation, as well as being chemically stable, resistant to thermal shock and able to exhibit high electrochemical stability. Such electrodes do not interact or bind to organic pollutants but can provide direct anodic oxidation to a water stream by the stripping of electrons from the covalent bonds of polluting substances. Such electrodes can be made by polycrystalline diamond formed by chemical vapour deposition (CVD) in a high temperature microprocess.

Thus, the treatment apparatus and method of the present invention preferably further comprise passing the wastewater, generally as a stream, through an anodic oxidation section including a conductive diamond anode, preferably a boron doped diamond electrode, to oxidise the organic molecules and/or microorganisms in the stream prior to its passage through the carbonator.

A UV oxidation and/or disinfection section for use with the present invention may comprise the use of any application of UV light to a stream, passage or flow of wastewater through such a section. The application of UV light at suitable wavelengths including 185 or 254 nm is well known in the art, commonly provided by one or more UV tubes or lamps located within and/or around the flow or passage of the wastewater through the UV oxidation or disinfection sections.

A heavy metal removal section of the treatment apparatus of the present invention may comprise one or more filters or substances able to remove heavy metal substances, in particular heavy metal ions, from a flow or passage of wastewater. Suitable substances or materials are known in the art, and include, but are not limited to; resins, especially chelating resins, absorbents, adsorbents, and carbon-based materials such as activated carbon (AC).

According to another embodiment of the present invention, the wastewater stream comprises a first concentrated stream passing through the anodic oxidation section and a first diluted steam combined with the treated stream after the anodic oxidation. The first diluted steam could be a rinsing stream and could be combined with the treated stream either prior to their combined discharge to a drain, or prior to the carbonator and/or any further treatment section present.

According to a further embodiment of the present invention, there is provided a method for the treatment of clinical analyser wastewater having the following composition:

| **Parameter** | **Unit** | **Concentration** |
|---|---|---|
| Chemical Oxygen Demand (COD) | mg/l | 3600 |
| Biological Oxygen Demand (BOD) | mg/l | 1500 |
| Bromide | mg/l | 1200 |
| Ammonia (NH₄) | mg/l | 27 |
| Total Phenols | mg/l | 0.9 |
| Ortho-Phosphate | mg/l | 54 |
| Copper | mg/l | 0.9 |
| Adsorbable Organic Halogenes (AOX) | mg/l | 2 |
| EDTA | mg/l | 39 |
| pH | | 11 |

The present invention uses anodic oxidation and carbonation for the treatment of clinical analyser wastewater having a COD of >3000mg/l and pH>10. The anodic oxidation may be carried out by any know means such as using a conductive diamond anode, optionally a boron doped diamond electrode, the carbonation by any known means such as using a pressurised cylinder and a membrane contactor.

Preferably, the method of the present invention reduces the COD and pH in a clinical analyser wastewater stream having a COD of >3000mg/l and a pH >10, to provide a treated stream having a COD of <2500mg/l, preferably <2000mg/l, and a pH <8.5.

Optionally, the methods can further include passing the stream through an ultraviolet disinfection section downstream of the carbonator.

Optionally, the methods further comprise the step of partially or fully recirculating the water downstream of the carbonator through the carbonator when the parameter measurement is outside, such as below, a pre-determined value.

The various aspects of the present invention can be practiced alone or in combination with one or more of the other aspects, as will be appreciated by those skilled in the relevant arts. The various aspects of the invention can optionally be provided in combination with one or more of the optional features of the other aspects of the invention. Also, optional features and values described in relation to one embodiment can typically be combined alone or together with other features in different embodiments of the invention. For example, the examples that are described hereinafter show examples of treated wastewater having a specification of chemicals and values that are a selection of the values listed hereinabove, without limitation to a particular combination.

Various embodiments and aspects of the invention will now be described in detail with reference to the accompanying figures. Still other aspects, features, and advantages of the present invention are readily apparent from the entire description thereof, including the figures, which illustrates a number of exemplary embodiments and aspects and implementations. The invention is also capable of other and different embodiments and aspects, and its several details can be modified in various respects, all without departing from the spirit and scope of the present invention. Accordingly, the drawings and descriptions are to be regarded as illustrative in nature, and not as restrictive. Furthermore, the terminology and phraseology used herein is solely used for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes.

Any discussion of processes, sections, apparatus, acts, materials, devices, articles and the like is included in the specification solely for the purpose of providing a context for the present invention. It is not suggested or represented that any or all of these matters formed part of the prior art base or were common general knowledge in the field relevant to the present invention.

In this disclosure, whenever a composition, an element or a group of elements is preceded with the transitional phrase "comprising", it is understood that we also contemplate the same composition, element or group of elements with transitional phrases "consisting essentially of, "consisting", "selected from the group of consisting of", "including", or "is" preceding the recitation of the composition, element or group of elements and vice versa.

All numerical values in this disclosure are understood as being modified by "about". All singular forms of elements, or any other components described herein including (without limitations) components of the apparatus to collect cuttings are understood to include plural forms thereof and vice versa.

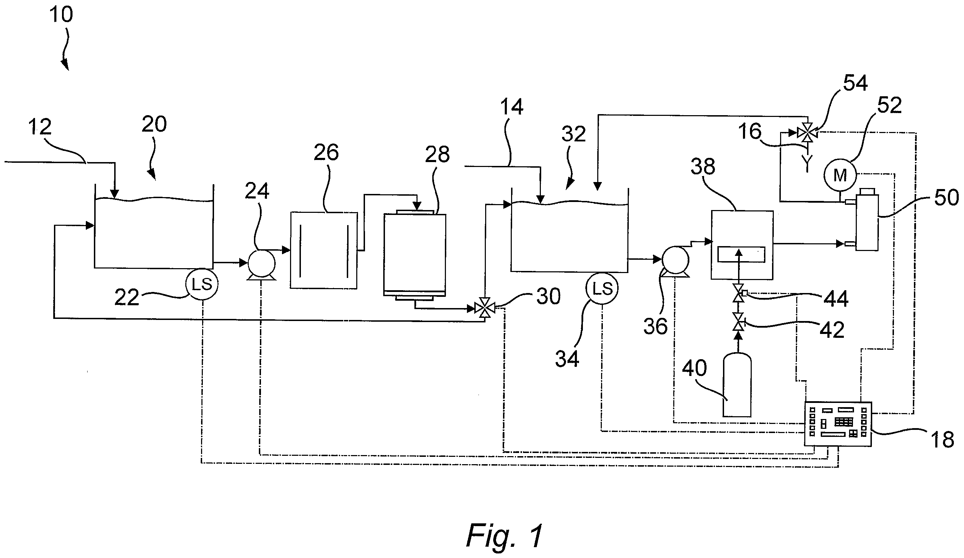

Thus, embodiments of the present invention will now be described by way of example only and with reference to the accompanying drawing Figure 1 which shows a first clinical analyser wastewater treatment apparatus 10 according to the present invention.

A concentrated effluent stream 12 and optionally a second more dilute stream 14 from a clinical analyser are passed to the clinical analyser wastewater treatment apparatus as produced by the clinical analyser. These streams may be continuous, intermittent or of varying flow pattern.

The wastewater treatment apparatus processes the fluids and dispenses them via an outlet 16 which may be directed to a drain or holding vessel as appropriate. A controller 18 contains a microprocessor and uses inputs from the treatment apparatus' sensors and its programmed logic to operate the flows and processes within the treatment apparatus.

The concentrated effluent is passed to a first reservoir, 20, with a level sensor 22 of any known design. When the level in the reservoir is appropriate pump 24 passes the wastewater to anodic oxidation section 26. This anodic oxidation may be in the form of cell or chamber, such as an electrochemical cell, having a conductive diamond anode (not shown), such as a boron doped diamond electrode, therewithin.

After passage through the anodic oxidation section 26, the part-treated stream is then provided to the heavy metal removal section 28. The heavy metal removal section 28 may comprise one or more chambers, compartments or stages (not shown), and optionally one or more resins, in particular ion-exchange resins, and filters, such as activated carbon filters, to remove heavy metal substances or particles, in particular heavy metal ions, from the wastewater. Typical heavy metals to be removed from clinical analyser wastewater include, but are not limited to, copper, calcium, zinc, silver, arsenic, cadmium and mercury.

After passage through the heavy metal removal section 28 the part treated wastewater can be passed to a second reservoir 32 or returned to reservoir 20 by a three way valve 30 depending upon the levels in the reservoirs 20 and 32. This return to the reservoir 20 provides for repeated treatments of the wastewater and also maintains a residual volume in the apparatus while further inlet waters 12, 14 are awaited from batch operation of the clinical analyser.

If present, the more dilute stream from the clinical analyser, 14, also feeds into the second reservoir 32. The second reservoir contains level sensors 34 in co-operation with the controller 18.

Controller 18 initiates pump 36 as appropriate to pass the partially treated wastewater into the carbonator 38. This contains a method of passing gaseous carbon dioxide in to the fluid and may comprise a simple contactor such as a sinter or a more complicated device such as fibres of hydrophobic membrane. It may be operated under pressure to improve dissolving or may be operated at atmospheric pressure. The carbon dioxide may be supplied from a cylinder, 40, which may be local to the treatment apparatus 10 or may be sited at a more distant location such as an outside gas cage. The cylinder, 40 may supply more that one wastewater treatment apparatus or have diverse uses. The outlet pressure from the cylinder is regulated 42 and the flow is controlled within the wastewater treatment apparatus via valve 44 in co-operation with controller 18.

After passage through the carbonator section the treated wastewater is passed through a UV disinfection section, 50. Within the UV disinfection section 50, there are provided one or more UV tubes or lamps (not shown), able to provide UV disinfection in a manner known in the art to the part-treated wastewater stream therewithin.

A sensor 52 is also sited downstream of the carbonator. The sensor is in communication with the controller, 18, and measures a parameter of the fluid so as to ascertain whether the pH of the fluid is within the desired limits. This parameter may be a milli-voltage as pH sensor but may alternatively be a milli-voltage as from a conductivity sensor.

Dependant on the value from the sensor the outlet valve 54 may pass the treated fluid to the drain 16 or return the fluid to the second reservoir 32 for further passage through the treatment processes.

The embodiment described above may also involve one or more sensors or other sensing devices able to sense or measure the level of one or more parameters of one or more of the streams, in particular one or more of the wastewater streams, such as the COD levels, etc.

The embodiment described above may include one or more alert or alarms, such as one or more visual or aural alarms, able to provide an alarm signal to a user or operator to indicate the non-function of a section, or the detecting or measuring of a parameter in a stream above or below one or more predetermined limits, including the operational lifetime of one or more consumable items such as purification pack.

## Claims

1. A clinical analyser wastewater treatment apparatus (10) able to neutralise in the absence of the use of harsh chemicals a clinical analyser wastewater stream (12) having a pH >9 and including one or more substances being ions, organics, biochemical reagents, heavy metals, heavy metal complexes, inorganic salts and inorganic reagents, comprising in order:
(i) a first reservoir (20);
(ii) an anodic oxidation section (26);
(iii) a heavy metal removal section (28);
(iv) a second reservoir (32);
(v) a UV disinfection section (50);
**characterised in that** the apparatus further includes:
(vi) a carbonator section (38) downstream of the heavy metal removal section (28) and upstream of the UV disinfection section, and able to treat the fluid from the heavy metal removal section to a pH of between 8.5 and 5.5;
(vii) a pH sensor (52) downstream of the carbonator section;
(viii) an outlet valve (54) and (ix) recirculation to the second reservoir, downstream of the pH sensor; (x) a control system (18) to control the operation of the carbonator, and in communication with the outlet valve (54) to pass treated fluid either to a drain (16) when the pH measurement is between 8.5 and 5.5, or to recirculation to the second reservoir and through the carbonator when the pH measurement is outside 8.5 and 5.5.

2. A clinical analyser wastewater treatment apparatus (10) as claimed in claim 1 wherein the anodic oxidation section (26) includes a conductive diamond anode.

3. A clinical analyser wastewater treatment apparatus (10) as claimed in claim 2 wherein the conductive diamond anode is a boron doped diamond electrode.

4. A clinical analyser wastewater treatment apparatus (10) as claimed in any previous claim able to provide a treated stream having a COD of <2500mg/l.

5. A clinical analyser wastewater treatment apparatus (10) as claimed in claim 4 able to provide a treated stream having a COD of <2000mg/l..

6. A method of neutralising in the absence of harsh chemicals a clinical analyser wastewater stream (12) having a pH >9 and including one or more substances being ions, organics, biochemical reagents, heavy metals, heavy metal complexes, inorganic salts and inorganic reagents, comprising in order the steps of:
passing the stream through a first reservoir (20);
passing the stream through an anodic oxidation section (26);
passing the stream through a heavy metal removal section (28);
passing the stream through a second reservoir (32);
passing the stream through a carbonator (38) to treat the fluid from the heavy metal removal section to a pH of between 8.5 and 5.5;
passing the stream through a UV disinfection section (50);
measuring the pH of the water downstream of the carbonator;
using the pH measurement to control the operation of the carbonator, and either:
(a) to partially or fully recirculate the water back to the second reservoir and through the carbonator when the pH measurement is outside 8.5 and 5.5, or
(b) to pass the water to a drain (16) when the pH measurement is within 8.5 and 5.5.

7. A method as claimed in claim 6 for reducing the COD and pH in a clinical analyser wastewater stream having a COD of >3000mg/l and pH >10 to provide a treated stream having a COD of <2500mg/l, and a pH <8.5.

8. A method as claimed in claim 7 to provide a treated stream having a COD of <2000mg/l.

## Patentansprüche

1. Eine Abwasserbehandlungsvorrichtung (10) eines klinischen Analysegeräts, die in der Lage ist, ohne die Verwendung aggressiver Chemikalien einen Abwasserstrom (12) eines klinischen Analysegeräts zu neutralisieren, der einen pH-Wert >9 aufweist und eine oder mehrere Substanzen umfasst, die Ionen, organische Stoffe, biochemische Reagenzien, Schwermetalle, Schwermetallkomplexe, anorganische Salze und anorganische Reagenzien sind, der Reihe nach beinhaltend:
(i) einen ersten Behälter (20);
(ii) einen Abschnitt (26) zur anodischen Oxidation;
(iii) einen Schwermetallentfernungsabschnitt (28);
(iv) einen zweiten Behälter (32);
(v) einen UV-Desinfektionsabschnitt (50);
**dadurch gekennzeichnet, dass** die Vorrichtung ferner Folgendes umfasst:
(vi) einen Carbonatorabschnitt (38) stromabwärts des Schwermetallentfernungsabschnitts (28) und stromaufwärts des UV-Desinfektionsabschnitts und der in der Lage ist, das Fluid von dem Schwermetallentfernungsabschnitt zu behandeln, sodass es einen pH-Wert zwischen 8,5 und 5,5 aufweist;
(vii) einen pH-Wert-Sensor (52) stromabwärts des Carbonatorabschnitts;
(viii) ein Auslassventil (54) und (ix) eine Rückführung zu dem zweiten Behälter, stromabwärts des pH-Wert-Sensors; (x) ein Steuersystem (18), um den Betrieb des Carbonators zu steuern und das in Verbindung mit dem Auslassventil (54) steht, um behandeltes Fluid entweder zu einem Abfluss (16) zu leiten, wenn die pH-Wert-Messung zwischen 8,5 und 5,5 liegt, oder um es zu dem zweiten Behälter und durch den Carbonator zurückzuführen, wenn die pH-Wert-Messung außerhalb von 8,5 und 5,5 liegt.

2. Abwasserbehandlungsvorrichtung (10) eines klinischen Analysegeräts gemäß Anspruch 1, wobei der Abschnitt (26) zur anodischen Oxidation eine leitfähige Diamantanode umfasst.

3. Abwasserbehandlungsvorrichtung (10) eines klinischen Analysegeräts gemäß Anspruch 2, wobei die leitfähige Diamantanode eine mit Bor dotierte Diamantelektrode ist.

4. Abwasserbehandlungsvorrichtung (10) eines klinischen Analysegeräts gemäß einem der vorhergehenden Ansprüche, die in der Lage ist, einen behandelten Strom bereitzustellen, der einen CSB von <2500 mg/l aufweist.

5. Abwasserbehandlungsvorrichtung (10) eines klinischen Analysegeräts gemäß Anspruch 4, die in der Lage ist, einen behandelten Strom bereitzustellen, der einen CSB von <2000 mg/l aufweist.

6. Ein Verfahren zum Neutralisieren ohne aggressive Chemikalien eines Abwasserstroms (12) eines klinischen Analysegeräts, der einen pH-Wert >9 aufweist und eine oder mehrere Substanzen umfasst, die Ionen, organische Stoffe, biochemische Reagenzien, Schwermetalle, Schwermetallkomplexe, anorganische Salze und anorganische Reagenzien sind, der Reihe nach die folgenden Schritte beinhaltend:
Leiten des Stroms durch einen ersten Behälter (20);
Leiten des Stroms durch einen Abschnitt (26) zur anodischen Oxidation;
Leiten des Stroms durch einen Schwermetallentfernungsabschnitt (28);
Leiten des Stroms durch einen zweiten Behälter (32);
Leiten des Stroms durch einen Carbonator (38), um das Fluid von dem Schwermetallentfernungsabschnitt zu behandeln, sodass es einen pH-Wert zwischen 8,5 und 5,5 aufweist;
Leiten des Stroms durch einen UV-Desinfektionsabschnitt (50);
Messen des pH-Werts des Wassers stromabwärts des Carbonators;
Verwenden der pH-Wert-Messung, um den Betrieb des Carbonators zu steuern, und
entweder:
(a) das Wasser teilweise oder vollständig zu dem zweiten Behälter und durch den Carbonator zurückzuführen, wenn die pH-Wert-Messung außerhalb von 8,5 und 5,5 liegt, oder
(b) das Wasser zu einem Abfluss (16) zu leiten, wenn die pH-Wert-Messung innerhalb von 8,5 und 5,5 liegt.

7. Verfahren gemäß Anspruch 6 zum Verringern des CSB und des pH-Werts in einem Abwasserstrom eines klinischen Analysegeräts, der einen CSB von >3000 mg/l und einen pH-Wert >10 aufweist, um einen behandelten Strom bereitzustellen, der einen CSB von <2500 mg/l und einen pH-Wert <8,5 aufweist.

8. Verfahren gemäß Anspruch 7, um einen behandelten Strom bereitzustellen, der einen CSB von <2000 mg/l aufweist.

## Revendications

1. Un appareil de traitement d'eaux usées d'analyseur clinique (10) capable de neutraliser en l'absence d'utilisation de produits chimiques agressifs un flux d'eaux usées d'analyseur clinique (12) ayant un pH > 9 et incluant une ou plusieurs substances qui soient des ions, des produits organiques, des réactifs biochimiques, des métaux lourds, des complexes de métaux lourds, des sels inorganiques et des réactifs inorganiques, comprenant dans l'ordre :
(i) un premier réservoir (20) ;
(ii) une section d'oxydation anodique (26) ;
(iii) une section de retrait de métaux lourds (28) ;
(iv) un deuxième réservoir (32) ;
(v) une section de désinfection par UV (50) ;
**caractérisé en ce que** l'appareil inclut en sus :
(vi) une section de carbonateur (38) en aval de la section de retrait de métaux lourds (28) et en amont de la section de désinfection par UV, et capable de traiter le fluide issu de la section de retrait de métaux lourds jusqu'à un pH compris entre 8,5 et 5,5 ;
(vii) un capteur de pH (52) en aval de la section de carbonateur ;
(viii) une vanne de sortie (54) et (ix) une recirculation jusqu'au deuxième réservoir, en aval du capteur de pH ; (x) un système de commande (18) pour commander le fonctionnement du carbonateur, et en communication avec la vanne de sortie (54) pour faire passer du fluide traité soit à un drain (16) lorsque la mesure de pH se situe entre 8,5 et 5,5, soit à une recirculation jusqu'au deuxième réservoir et à travers le carbonateur lorsque la mesure de pH se situe en dehors de 8,5 et 5,5.

2. Un appareil de traitement d'eaux usées d'analyseur clinique (10) tel que revendiqué dans la revendication 1 dans lequel la section d'oxydation anodique (26) inclut une anode en diamant conductrice.

3. Un appareil de traitement d'eaux usées d'analyseur clinique (10) tel que revendiqué dans la revendication 2 dans lequel l'anode en diamant conductrice est une électrode en diamant dopée au bore.

4. Un appareil de traitement d'eaux usées d'analyseur clinique (10) tel que revendiqué dans n'importe quelle revendication précédente capable de fournir un flux traité ayant une DCO de < 2 500 mg/l.

5. Un appareil de traitement d'eaux usées d'analyseur clinique (10) tel que revendiqué dans la revendication 4 capable de fournir un flux traité ayant une DCO de < 2 000 mg/l.

6. Une méthode de neutralisation en l'absence de produits chimiques agressifs d'un flux d'eaux usées d'analyseur clinique (12) ayant un pH > 9 et incluant une ou plusieurs substances qui soient des ions, des produits organiques, des réactifs biochimiques, des métaux lourds, des complexes de métaux lourds, des sels inorganiques et des réactifs inorganiques, comprenant dans l'ordre les étapes consistant :
à faire passer le flux à travers un premier réservoir (20) ;
à faire passer le flux à travers une section d'oxydation anodique (26) ;
à faire passer le flux à travers une section de retrait de métaux lourds (28) ;
à faire passer le flux à travers un deuxième réservoir (32) ;
à faire passer le flux à travers un carbonateur (38) afin de traiter le fluide issu de la section de retrait de métaux lourds jusqu'à un pH compris entre 8,5 et 5,5 ;
à faire passer le flux à travers une section de désinfection par UV (50) ;
à mesurer le pH de l'eau en aval du carbonateur ;
à utiliser la mesure de pH pour commander le fonctionnement du carbonateur, et soit :
(a) faire recirculer partiellement ou entièrement l'eau en retour jusqu'au deuxième réservoir et à travers le carbonateur lorsque la mesure de pH se situe en dehors de 8,5 et 5,5, soit
(b) faire passer l'eau jusqu'à un drain (16) lorsque la mesure de pH se situe dans les limites de 8,5 et 5,5.

7. Une méthode telle que revendiquée dans la revendication 6 pour réduire la DCO et le pH dans un flux d'eaux usées d'analyseur clinique ayant une DCO de > 3 000 mg/l et un pH > 10 afin de fournir un flux traité ayant une DCO de < 2 500 mg/l, et un pH < 8,5.

8. Une méthode telle que revendiquée dans la revendication 7 afin de fournir un flux traité ayant une DCO de < 2 000 mg/l.
